# EUROPEAN PATENT APPLICATION

(11) **EP 2 454 952 A1**
(43) Date of publication of application: **23.05.2012**
(21) Application number: 10799539.1
(22) Date of filing: 15.03.2010
(51) Int. Cl.: A23L 2/38

(54) **ALCOHOL-FREE BEER-LIKE MALT BEVERAGE AND METHOD FOR PRODUCING SAME**

(30) Priority: 17.07.2009 JP 2009168727
(71) Applicant: KIRIN BEER KABUSHIKI KAISHA, Chuo-Ku Tokyo 104-8288 (JP)
(72) Inventor: MURAKAMI, Atsushi, Tokyo 104-8288 (JP); OTA, Takehito, Tokyo 104-8288 (JP); ITAKURA, Takehito, Tokyo 104-8288 (JP)
(74) Representative: HOFFMANN EITLE
(86) International application number: PCT/JP2010/001824
(87) International publication number: WO 2011/007475

(57) **Abstract**

Provided is an alcohol-free beer-like malt beverage from wort added with hop component without fermentation, having reduced off-flavor intrinsic to a malt beverage and suppressed nasty smell derived from hop, and retaining an aromatic component of hop. Produced is an alcohol-free beer-like malt beverage having reduced off-flavor and retaining an aromatic component of hop without fermentation, unlike a conventional non-alcohol beer production process, by controlling the content of a hop-derived aromatic component, myrcene, α-humulene or β-selinene, in the beer-like malt beverage to a specific value. In the present invention, the content of a hop-derived aromatic component in the beer-like malt beverage is controlled by controlling the addition timing or additive amount of hop and/or a hop essential-oil component during a wort-boiling step or the addition amount of a hop essential-oil component in a step after the wort-boiling step.

## Description

### Technical Field

The present invention relates to an alcohol-free beer-like malt beverage and a method for producing the same, and particularly relates to an alcohol-free beer-like malt beverage prepared from wort added with hop component without fermentation, having reduced off-flavor intrinsic to a malt beverage and suppressed nasty smell derived from hop, and retaining an aromatic component of hop.

### Background Art

Conventionally, as an alcoholic beverage having a beer-like flavor for persons in a situation of having to refrain from taking alcohol or persons who cannot take alcohol, a low-alcohol malt beverage or a "non-alcohol beer" has been provided. In the Japanese Liquor Tax Act, a fermented beverage having an alcohol content of less than 1% is dealt as a non-alcoholic fermented beverage. The non-alcoholic fermented beverage has been produced in various methods. Examples of known methods thereof include a method of suppressing fermentation of a fermentable saccharide as much as possible during a production process for a fermented beverage; a method of suppressing generation of alcohol by use of a specific yeast; a method in which an alcoholic beverage is produced by fermentation and thereafter the alcohol content is reduced to be less than 1% by distillation; a method in which an alcoholic beverage is produced and thereafter the alcohol content is reduced to be less than 1% by dialysis; and a method in which an alcoholic beverage is treated by asymmetric reverse osmosis membrane to reduce an alcohol content to less than 1%.

Furthermore, examples of other methods so far disclosed include a method of reducing the concentration of alcohol to be generated by adding α-glucosidase in a preparation step for beer production to convert a fermentable saccharide contained in a saccharified liquid to a non-fermentable saccharide (Japanese unexamined Patent Application Publication No. 5-68528); a method of producing a low alcohol beverage having an alcohol content of less than 1 vol% by extracting and removing an alcohol content from a beer product with supercritical carbon dioxide as an extraction solvent (Japanese unexamined Patent Application Publication No. 2004-215551); and a method of producing non-alcohol beer having favorable flavor and taste by a beer production process via malting, preparation, fermentation and aging steps, where, in the fermentation step, fermentation is performed by culturing yeast while stirring the wort under aeration, and further, in the aging step, aging is performed by adding *Candida tropicalis* pK233 capable of utilizing ethyl alcohol (Japanese unexamined Patent Application Publication No. 2004-222572).

As described above, in conventional production methods for a low-alcohol malt beverage, fermentation with yeast is performed, similarly to a general beer beverage to obtain flavor close to those of beer; at the same time, the content of alcohol is reduced by e.g., suppressing fermentation or removing alcohol after fermentation by a single or a plurality of methods. Conventional methods all employ fermentation with yeast. However, in a method employing a fermentation process, even if the yield of alcohol is suppressed under strict control, insufficient fermentation with yeast inevitably occurs, with the result that off-flavor derived from wort becomes outstanding, and disadvantageously unfavorable flavor still remains. Also a method employing no fermentation has the same problem as above because of the absence of fermentation with yeast. Furthermore, in a method of removing an alcohol content after fermentation, flavor and taste of beer inevitably reduce as removal of the alcohol content. The resultant product tends to be a low-alcohol malt beverage having monotonic flavor.

### Prior Art Documents

### Patent Documents

Patent Document 1: Japanese Unexamined Patent Application Publication No. 5-68528
Patent Document 2: Japanese Unexamined Patent Application Publication No. 2004-215551
Patent Document 3: Japanese Unexamined Patent Application Publication No. 2004-222572

### Summary of the Invention

### Object to be Solved by the Invention

An object of the present invention is to provide an alcohol-free beer-like malt beverage and a method for producing the same, and particularly to provide an alcohol-free beer-like malt beverage prepared from wort added with hop component without fermentation, having reduced off-flavor intrinsic to a malt beverage and suppressed nasty smell derived from hop, and retaining an aromatic component of hop.

### Means to Solve the Object

The present inventors intensively studied with a view to providing an alcohol-free beer-like malt beverage prepared from wort added with hop component without fermentation, having reduced off-flavor intrinsic to a malt beverage and suppressed nasty smell derived from hop, and retaining an aromatic component of hop. Through the studies, they have found that an alcohol-free beer-like malt beverage having reduced off-flavor and retaining an aromatic component of hop, can be produced without fermentation, unlike a production process for conventional non-alcohol beer, by controlling the content of a hop-derived aromatic component in the beer-like malt beverage, myrcene, α-humulene or β-selinene to a specific value. Based on the finding, they achieved the present invention.

The present invention provides an alcohol-free beer-like malt beverage prepared from wort added with hop component without fermentation, having reduced off-flavor and retaining an aromatic component of hop, wherein the content of a hop-derived aromatic component, myrcene, α-humulene or β-selinene, in the beer-like malt beverage is controlled such that an indicator component value determined by GC/MS for obtaining a wort-smell reduction effect is 2.5 ppb or more for myrcene or is 5.2 ppb or more for α-humulene, or 1.5% or more for β-selinene as quantified in terms of a response ratio of quantitative ion used in the quantification (93 m/z) to ion of borneol (110 m/z) as an internal standard; and that an indicator component value for suppressing nasty smell derived from hop is less than 187.5 ppb for myrcene or less than 65.1 ppb for α-humulene.

In the present invention, through studies for producing an alcohol-free beer-like malt beverage, to overcome a problem that alcohol is generated if fermentation is performed with yeast, the present inventors investigated on a method for producing a beer-like malt beverage without yeast fermentation and employing wort produced from malt as a final product. However, in this case, since unfermented wort has strong intrinsic off-flavor (wort smell), the resultant flavor was far from beer-flavor. It is known that even if fermentation occurs slightly, such off-flavor is strong. To reduce off-flavor and control the flavor to be more favorable, hop or a processed product derived from hop, for example, a fraction of an essential-oil component of hop was used. As a result, as mentioned above, the present inventors have found that an alcohol-free beer-like malt beverage having reduced off-flavor and retaining an aromatic component of hop, can be produced without fermentation, unlike a production process for conventional non-alcohol beer, by controlling the content of a hop-derived aromatic component, myrcene, α-humulene or β-selinene, in the beer-like malt beverage to a specific value.

To describe more specifically, through studies intensively made for producing an alcohol-free beer-like malt beverage having reduced off-flavor and retaining an aromatic component of hop, the effect of hop on reducing off-flavor, particularly wort smell, was checked. More specifically, hop was added to boiling wort at different timings to prepare test samples. These samples were compared to a test sample containing no hop by sensory evaluation. As a result, an off-flavor reduction effect was confirmed in a sample containing hop in any one of the test sections. A large off-flavor reduction effect was confirmed in a method of adding hop (2 g/L) during boiling for 90 minutes. Furthermore, in the case where hop was not added during boiling but the essential oil of hop was added in a step after boiling, it was confirmed that the same effect was obtained. However, the larger the amount of hop was added at the timing the nearer the completion of the boiling step, or the larger the amount of hop essential-oil was added in a later step, the more the resin-like flavor of hop is emphasized. Against the intention, off-flavor was added and consequently flavor balance was significantly broken.

As a hop-derived aromatic component, many components have been reported such as myrcene, β-caryophyllene, β-farnesene, α-humulene, linalool, α-selinene, β-selinene, β-ionene, damascenone and geraniol (Documents 1, 2).
Document 1) Seaton, J.C., et al., Proceedings of the 17th Convention of the Institute of Brewing., Australia and New Zealand Section., pll7-124, 1982.
Document 2) Prepete P., et al., J Am Soc Brew Chem, 56, p104-108, 1998.
The above components were used as objects to be analyzed and subjected to analysis by a gas chromatography-mass spectrometer (hereinafter, GC/MS) to elucidate the relationship between off-flavor derived from hop and the off-flavor reduction effect. As a result, it was confirmed that the contents of myrcene, α-humulene and β-selinene in a malt beverage are related to the effect of reducing wort smell and degree of off-flavor derived from hop, i.e., "resin-like odor".

In the present invention, the content of hop-derived aromatic component, myrcene, α-humulene or β-selinene, in the beer-like malt beverage prepared by adding a hop component to wort, is controlled so as to fall within the aforementioned predetermined range of an indicator component value determined by GC/MS for obtaining wort-smell reduction effect. The addition of the hop component comprises addition of hop and/or a hop essential-oil component.
Furthermore, in the present invention, the content of a hop-derived aromatic component, myrcene, α-humulene or β-selinene, in the beer-like malt beverage, is controlled by controlling the addition timing or addition amount of hop and/or a hop essential-oil component in a wort-boiling step or the addition amount of hop essential-oil component in a step after the wort-boiling step.

According to production of a beer-like malt beverage according to the present invention, in producing a beer-like malt beverage from wort added with a hop component, hop and/or a hop essential-oil component are added during a wort-boiling step and further a hop essential-oil component is added in a step after boiling wort, to control the content of a hop-derived aromatic component, myrcene, α-humulene or β-selinene, in a beer-like malt beverage such that an indicator component value determined by GC/MS for obtaining a wort-smell reduction effect is 2.5 ppb or more for myrcene or 5.2 ppb or more for α-humulene, or 1.5% or more for β-selinene as quantified in terms of a response ratio of ion used in the quantification (93 m/z) to ion of borneol (110 m/z) as an internal standard; and that an indicator component value for suppressing nasty smell derived from hop is less than 187.5 ppb for myrcene or less than 65.1 ppb for α-humulene. According to the present invention method, an alcohol-free beer-like malt beverage having reduced off-flavor and retaining an aromatic component of hop can be produced.

More specifically, the present invention provides: [1] an alcohol-free beer-like malt beverage prepared without fermentation, having reduced off-flavor and retaining an aromatic component of hop, wherein a content of a hop-derived aromatic component, myrcene, α-humulene or β-selinene in the beer-like malt beverage is controlled such that an indicator component value determined by GC/MS for obtaining a wort-smell reduction effect is 2.5 ppb or more for myrcene or 5.2 ppb or more for α-humulene, or 1.5% or more for β-selinene as quantified in terms of a response ratio of ion used in the quantification (93 m/z) to ion of borneol (110 m/z) as an internal standard; and that an indicator component value for suppressing nasty smell derived from hop is less than 187.5 ppb for myrcene or less than 65.1 ppb for α-humulene, in a beer-like malt beverage prepared from wort added with hop component; and [2] the alcohol-free beer-like malt beverage prepared without fermentation, having reduced off-flavor and retaining an aromatic component of hop, according to [1] above, wherein the addition of the hop component comprises addition of hop and/or a hop essential-oil component.

Furthermore, the present invention provides: [3] the alcohol-free beer-like malt beverage prepared without fermentation, having reduced off-flavor and retaining an aromatic component of hop, according to [2] above, wherein the control of the content of a hop-derived aromatic component, myrcene, α-humulene or β-selinene, in the beer-like malt beverage is performed by the addition timing or additive amount of hop and/or a hop essential-oil component during a wort-boiling step or the addition amount of hop essential-oil component after the wort-boiling step; and [4] a method for producing an alcohol-free beer-like malt beverage prepared by adding a hop component to wort without fermentation, having reduced off-flavor and retaining an aromatic component of hop, including adding hop and/or a hop essential-oil component in a wort-boiling step and further adding a hop essential-oil component during a step after boiling wort, to control the content of a hop-derived aromatic component, myrcene, α-humulene or β-selinene, in a beer-like malt beverage such that an indicator component value determined by GC/MS for obtaining a wort-smell reduction effect is 2.5 ppb or more for myrcene or 5.2 ppb or more for α-humulene, or 1.5% or more for β-selinene as quantified in terms of a response ratio of ion used in the quantification (93 m/z) to ion of borneol (110 m/z) as an internal standard; and that an indicator component value for suppressing nasty smell derived from hop is less than 187.5 ppb for myrcene or less than 65.1 ppb for α-humulene, when producing a beer-like malt beverage prepared from wort added with hop component.

### Effect of the Invention

The present invention made it possible to provide a beer-like flavor malt beverage prepared without fermentation, having reduced off-flavor intrinsic to a malt beverage and suppressed nasty smell derived from hop, and retaining an aromatic component of hop. Based on this, the present invention, unlike conventional non-alcohol beers using a fermentation process, made it possible to provide an alcohol-free beer-flavor malt beverage excellent in flavor. Furthermore, a method for producing the beer-like malt beverage of the present invention does not include complicated steps such as a fermentation step and an alcohol removing step. In addition, a problem such as a reduction/loss of flavor components from a malt beverage, which occurs simultaneously with removal of alcohol in the alcohol removing step, can be overcome. Therefore, the present invention exerts an excellent effect of providing an alcohol-free beer-like malt beverage rich in flavor by a simple operation.

### Mode of Carrying Out the Invention

The present invention consists of an alcohol-free beer-like malt beverage prepared from wort added with hop component without fermentation, having reduced off-flavor and retaining an aromatic component of hop, wherein the content of a hop-derived aromatic component, myrcene, α-humulene or β-selinene, in the beer-like malt beverage is controlled such that an indicator component value determined by GC/MS is 2.5 ppb or more for myrcene or 5.2 ppb or more for α-humulene, or 1.5% or more for β-selinene as quantified in terms of a response ratio of ion used in the quantification (93 m/z) to ion of borneol (110 m/z) as an internal standard; and that an indicator component value for suppressing nasty smell derived from hop is less than 187.5 ppb for myrcene or less than 65.1 ppb for α-humulene; and a method for producing the alcohol-free beer-like malt beverage.

The wort prepared in the production of a beer-like malt beverage of the present invention is not particularly different from the wort usually prepared in the production for beer, more specifically, is the wort prepared from a general malt raw-material for production through a malting step and a preparation step, and corresponds to a prefermentation solution in a brewing process. Furthermore, as the hop and hop essential-oil used in producing the beer-like malt beverage of the present invention, hop and hop essential-oil generally used in a brewing process can be used.

In the present invention, a beer-like malt beverage is produced by preparing wort from a malt raw-material by a conventional method in a preparation step, adding hop and/or a hop essential-oil component during a wort-boiling step, further adding a hop essential-oil component in the step after the wort-boiling to control the content of a hop-derived aromatic component, myrcene, α-humulene or β-selinene, in the beer-like malt beverage such that an indicator component value determined by GC/MS is 2.5 ppb or more for myrcene or 5.2 ppb or more for α-humulene, or 1.5% or more for β-selinene as quantified in terms of a response ratio of ion used in the quantification (93 m/z) to ion of borneol (110 m/z) as an internal standard; or an indicator component value for suppressing nasty smell derived from hop is less than 187.5 ppb for myrcene or less than 65.1 ppb for α-humulene. The addition timing and addition amount of hop and/or a hop essential-oil component in the malt beverage production process are determined based on data previously obtained, more specifically, the relationship between the addition timing and addition amount of hop and/or a hop essential-oil component and the content of a hop-derived aromatic component, myrcene, α-humulene or β-selinene, in the beer-like malt beverage, as an indicator component value. Hop and/or a hop essential-oil component are added such that the content of myrcene, α-humulene or β-selinene as an indicator component value in a beer-like malt beverage, falls within the predetermined range.

The content of myrcene, α-humulene or β-selinene as an indicator component value is measured by a gas chromatography mass spectrometer (GC/MS). Any commercially available GC/MS can be used. The aromatic components are extracted by a method of using a C18 solid-phase column and then subjected to GC/MS. The values for a substance added as an internal standard and myrcene, α-humulene or β-selinene are expressed by a relative intensity of a specific ion thereof. As the internal standard, Borneol is used. The value of β-selinene is expressed by a response ratio of each of ions to ion used in the quantification of borneol (110 m/z) as an internal standard.

The present invention will be more specifically described by way of the following Examples; however, the technical range of the present invention is not limited to these examples.

### Examples

[Example 1: Preparation, evaluation and analysis of sample]

### (1) Sample preparation method and sensory evaluation:

In Examples of the present invention, a wort sample used in evaluation was prepared in a 1.5 L-size apparatus. A wort preparation (the ratio of malt used at the preparation time: 69%, the ratio of adjuncts (rice, corn grits, cornstarch) used: 33%) controlled at 8.5 degrees was used as a sample and subjected to a boiling test. The wort was heated and boiled by an electric heater. The boiling was performed constantly while controlling such that an evaporative rate of 10% was obtained in 90 minutes. After completion of boiling, water was added to the sample in the amount equal to the amount of evaporated water and the wort was allowed to stand still at 95°C for 60 minutes. The sample was filtrated by a filter paper and cooled with ice water. The addition conditions of hop and a hop essential-oil processed product are as shown in each Example. The sensory evaluation was carried out by three panelists. The intensity of wort smell and hop resin-like smell was defined as follows: 0: not sensed, 1: sensed, 2: clearly sensed, 3: strongly sensed. Total balance, i.e., favorability, was defined as follows: ×: not favorable, o: preferable within an acceptable range, ⊚: preferable.

(2) Calculation of myrcene, α-humulene and β-selinene based on analysis of aromatic components of hop by GC/MS:
In the Examples of the present invention, a commercially available GC/MS was used. Aromatic components were extracted by a method of using a C18 solid-phase column and subjected to GC/MS. The quantities are expressed as a relative intensity of a specific ion of myrcene, α-humulene or β-selinene to a substance added as an internal standard. Borneol was used as an internal standard and was added to a sample to be a level of 25 ppb. The analysis conditions of aromatic components of hop by GC/MS are as shown in Table 1. β-Selinene was quantified in terms of a response ratio of ion used in the quantification to ion of borneol (110 m/z) as an internal standard (under GC/MS analysis conditions shown in Table 1).

**[Table 1]**

| Capillary column | | Trade name:HP-INNOWAX |
|---|---|---|
| | | (length 60 m, inner diameter 0.25 mm, film thickness 0.25 µm) |
| Oven | | 40°C, 0.3 min-3°C / min→240°C, 20 min |
| temperature | | |
| Carrier gas | | He, 10 psi low-pressure supply |
| Transfer line | | 240°C |
| temperature | | |
| | MS ion-source | 230°C |
| | temperature | |
| | MSQ pole | 150°C |
| | temperature | |
| | Temperature of front | 200°C |
| | injection-port | |
| Monitoring ion | | m/z=69, 93, 110, 149 |
| Ion used in quantification | | |
| | Myrcene | m/z=69 |
| | α-Humulene | m/z=69 |
| | β-Selinene | m/z=93 |

### [Example 2: Confirmation of off-flavor reduction effect]

(1) Confirmation of off-flavor reduction effect by use of hop:
   As hop, German Perle was used (Table 2). A sample containing no hop was prepared (Test 1); samples were prepared by adding hop 5 minutes after initiation of boiling (Tests 2, 3); a sample was prepared by adding hop 15 minutes after initiation of boiling (Test 4); a sample was prepared by adding hop 85 minutes after initiation of boiling (Test 5); samples were prepared by adding hop (2g/L and 3g/L) to wort allowed to stand still (Test 6 and Test 7, respectively).

The results of sensory evaluation are as follows. In Test 1, strong wort smell was sensed; however in Test 2, Test 3, Test 4, Test 5 and Test 6, a reduction of wort smell was confirmed. In Test 7, a reduction of wort smell was confirmed and flavor was preferable within an acceptable range; however, hop-derived "resin odor" was relatively intensive. Accordingly, the use range of hop effective for reducing wort smell and contributing to balanced flavor without feeling of strangeness was as shown in Test 2, Test 3, Test 4, Test 5, Test 6 and Test 7, and more preferably as shown in Test 2, Test 3, Test 4, Test 5 and Test 6.

(2) Confirmation of off-flavor reduction effect by use of hop essential-oil processed product:
   As a hop essential-oil processed product, a product manufactured by a flavor company in Japan was used (Table 2). The hop essential-oil processed product was added to wort boiled and containing no hop in an amount of 0 g/L (Test 1), 0.0425 g/L (Test 8), 0.085 g/L (Test 9), 0.1105 g/L (Test 10) and 0.1275 g/L (Test 11) to prepare samples.

The results of sensory evaluation are as follows. A reduction of wort smell was confirmed in Test 8, Test 9 and Test 10; whereas, in Test 11, the intensity of hop-derived "resin odor" increases, and the sample of Test 11 was evaluated as not preferable. Accordingly, the use range of the hop processed product effective for reducing wort smell and contributing to balanced flavor without feeling of strangeness was as shown in Test 8, Test 9 and Test 10.

### (3) Confirmation of off-flavor reduction effect by use of different hop varieties:

A test was performed by newly using, in addition to German Perle used in the tests so far performed, hop varieties, German Hersbrucker, Japanese Kirin No. 2, Czech Saaz, German Hallertau tradition, American Cascade and German Hallertau Mittelfrueher (Table 3). Hop (2 g) was added 85 minutes after boiling. As a control, a sample containing no hop was used.

The results of sensory evaluation are as follows. In the control containing no hop, strong smell of wort was sensed, whereas, wort smell was reduced in any one of test sections. Accordingly, it was confirmed that the wort-smell reduction effect does not vary depending on hop varieties.

### (4) Verification based on chemical-component value:

The wort-smell reduction effect and degree of off-flavor such as hop-derived resin odor were analyzed based on chemical component values. The components used as an indicator were myrcene, β-caryophyllene, β-farnesene, α-humulene, linalool, α-selinene, β-selinene, β-ionene, damascenone and geraniol, etc., which are generally contained in a hop essential-oil. As a result of intensive studies with a view to finding components having a strong relationship, myrcene, α-humulene and β-selinene were found. GC/MS analysis was performed by focusing on these components.

The analysis values obtained in Tests are shown in Table 2 and Table 3. The range of analysis values consistent with the results of the sensory evaluations are as follows. Wort-smell reduction effect was obtained in myrcene at a content of 2.5 ppb or more (Table 2: Test 2). In contrast, if the content of myrcene exceeds 187.5 ppb (Table 2: Test 11), nasty smell derived from hop was outstanding and consequently favorability decreased. Similarly, in α-humulene, wort-smell reduction effect was obtained at a content of 5.2 ppb or more (Table 3: Hallertau Mittelfrueher). In contrast, if the content of α-humulene exceeds 65.1 ppb (Table 2: Test 11), nasty smell derived from hop was outstanding and consequently favorability decreased. In the case of β-selinene, the relationship with the intensity of nasty smell derived from hop is not clear; however, wort-smell reduction effect was obtained if the content of β-selinene is 1.5% or more (Table 3: Cascade).

To summarize, the preferable use range of hop are as follows:
(i) The indicator component value for obtaining a wort-smell reduction effect is as follows:
   Myrcene: 2.5 ppb or more; or α-humulene: 5.2 ppb or more; or β-selinene: 1.5% or more as quantified in terms of a response ratio of ion used in the quantification (93 m/z) to ion of borneol (110 m/z) as an internal standard.
(ii) The indicator component value for suppressing nasty smell derived from hop is as follows:
   Myrcene: within the range of less than 187.5 ppb, or α-humulene: within the range of less than 65.1 ppb.

**[Table 2]**

| | Addition timing (minutes later) | Addition amount (g/L) | Test 1 | 2 | 3 | 4 | 5 | 6 | 7 | 8 | 9 | 10 | 11 |
|---|---|---|---|---|---|---|---|---|---|---|---|---|---|
| Hop | 5 minutes later | 1 | | ○ | | | | | | ○ | ○ | ○ | ○ |
| | | 2 | | | ○ | | | | | | | | |
| | 15 minutes later | 2 | | | | ○ | | | | | | | |
| | 85 minutes later | 2 | | | | | ○ | | | | | | |
| | Wort at standstill | 2 | | | | | | ○ | | | | | |
| | | 3 | | | | | | | ○ | | | | |
| Hop | Cold wort | 0 | ○ | ○ | ○ | ○ | ○ | ○ | ○ | | | | |
| essential -oil | Cold wort | 0.0425 | | | | | | | | ○ | | | |
| flavor | Cold wort | 0.0850 | | | | | | | | | ○ | | |
| | Cold wort | 0.1105 | | | | | | | | | | ○ | |
| | Cold wort | 0.1275 | | | | | | | | | | | ○ |
| Analysis value | Component | Concentr ation | | | | | | | | | | | |
| | Myrcene | ppb | 1 or less | 2.5 | 5.7 | 11.3 | 19.0 | 22.7 | 33.9 | 62.5 | 125.0 | 162.5 | 187.5 |
| | α-Humulene | ppb | 1 or less | 13.2 | 14.6 | 17.0 | 33.7 | 31.8 | 59.8 | 21.7 | 43.4 | 56.4 | 65.1 |
| | β-Selinene | % 1) | 1 or less | 5.0 | 13.9 | 13.9 | 10.8 | 11.7 | 11.0 | 2.7 | 5.3 | 6.9 | 8.0 |
| Sensory test results ²⁾ | | | | | | | | | | | | | |
| Intensity of wort smell | | | 3 | 2 | 1 | 1 | 1 | 1 | 1 | 1 | 1 | 1 | 1 |
| Intensity of hop resin-like odor | | | 0 | 0 | 0 | 0 | 0 | 1 | 2 | 1 | 2 | 2 | 3 |
| Favorability (total balance) | | | × | ○ | ⊚ | ⊚ | ⊚ | ⊚ | ○ | ⊚ | ⊚ | ⊚ | × |

| | | | | | | | | | | | | | |
|---|---|---|---|---|---|---|---|---|---|---|---|---|---|
| 1) β-selinene was quantified in terms of a response ratio of ion used in the quantification (93 m/z) to ion of borneol (110 m/z) serving as an internal standard. 2) Intensity was defined as follows: 0: not sensed, 1: sensed, 2: clearly sensed, 3: strongly sensed. | | | | | | | | | | | | | |

Favorability was defined as follows: ×: not favorable, ○: preferable within an acceptable range, ⊚: preferable.

**[Table 3]**

| | | Hersbrucker | Kirin No. 2 | Saaz | Hallertau tradition | Cascade | Hallertau Mittelfrueher |
|---|---|---|---|---|---|---|---|
| Component | Concentration | | | | | | |
| Myrcene | ppb | 5.0 | 11.9 | 6.0 | 9.4 | 5.7 | 8.0 |
| α-Humulene | ppb | 7.5 | 6.5 | 7.8 | 8.2 | 6.8 | 5.2 |
| β-Selinene | % ¹⁾ | 2.5 | 3.2 | 3.4 | 7.3 | 1.5 | 2.6 |
| Sensory test results ²⁾ | | | | | | | |
| Intensity of wort smell | | 1 | 1 | 1 | 1 | 1 | 1 |
| Intensity of hop resin-like odor | | 0 | 0 | 0 | 0 | 0 | 0 |
| Favorability (total balance) | | ⊚ | ⊚ | ⊚ | ⊚ | ⊚ | ⊚ |

| | | | | | | | |
|---|---|---|---|---|---|---|---|
| 1) β-selinene was quantified in terms of a response ratio of ion used in the quantification (93 m/z) to ion of borneol (110 m/z) as an internal standard. 2) Intensity was defined as follows: 0: not sensed, 1: sensed, 2: clearly sensed, 3: strongly sensed. | | | | | | | |

Favorability was defined as follows: x: not favorable, ○: preferable within an acceptable range, ⊚: preferable.

### Industrial Applicability

The present invention provides a beer-flavor malt beverage having reduced off-flavor intrinsic to a malt beverage and suppressed nasty smell derived from hop, and retaining an aromatic component of hop as well as being alcohol-free and excellent in flavor unlike conventional non-alcohol beer. Furthermore, the present invention provides a method for producing alcohol-free beer-like malt beverage rich in flavor by a simple operation.

## Claims

1. An alcohol-free beer-like malt beverage prepared without fermentation, having reduced off-flavor and retaining an aromatic component of hop,
wherein a content of a hop-derived aromatic component, myrcene, α-humulene or β-selinene in the beer-like malt beverage is controlled such that an indicator component value determined by GC/MS for obtaining a wort-smell reduction effect is 2.5 ppb or more for myrcene or 5.2 ppb or more for α-humulene, or 1.5% or more for β-selinene as quantified in terms of a response ratio of ion used in the quantification (93 m/z) to ion of borneol (110 m/z) as an internal standard; and that an indicator component value for suppressing nasty smell derived from hop is less than 187.5 ppb for myrcene or less than 65.1 ppb for α-humulene, in a beer-like malt beverage prepared from wort added with hop component.

2. The alcohol-free beer-like malt beverage prepared without fermentation, having reduced off-flavor and retaining an aromatic component of hop, according to claim 1, wherein the addition of the hop component comprises addition of hop and/or a hop essential-oil component.

3. The alcohol-free beer-like malt beverage prepared without fermentation, having reduced off-flavor and retaining an aromatic component of hop according to claim 2, wherein the control of the content of a hop-derived aromatic component, myrcene, α-humulene or β-selinene in the beer-like malt beverage is performed by the addition timing or additive amount of hop and/or a hop essential-oil component during a wort-boiling step or the additive amount of hop essential-oil component after the wort-boiling step.

4. A method for producing an alcohol-free beer-like malt beverage prepared without fermentation, having reduced off-flavor and retaining an aromatic component of hop, comprising adding hop and/or a hop essential-oil component during a wort-boiling step and further adding a hop essential-oil component in a step after boiling wort, to control a content of a hop-derived aromatic component, myrcene, α-humulene or β-selinene in a beer-like malt beverage such that an indicator component value determined by GC/MS for obtaining a wort-smell reduction effect is 2.5 ppb or more for myrcene or 5.2 ppb or more for α-humulene, or 1.5% or more for β-selinene as quantified in terms of a response ratio of ion used in the quantification (93 m/z) to ion of borneol (110 m/z) as an internal standard; and that an indicator component value for suppressing nasty smell derived from hop is less than 187.5 ppb for myrcene or less than 65.1 ppb for α-humulene, when producing a beer-like malt beverage prepared from wort added with hop component.
